(19) **Europäisches Patentamt**
**European Patent Office**
**Office européen des brevets**

(11) **EP 1 861 259 B1**

(12) **EUROPEAN PATENT SPECIFICATION**

(45) Date of publication and mention
of the grant of the patent:
**07.01.2009 Bulletin 2009/02**

(51) Int Cl.:
**B41M 5/00** *(2006.01)*   **B01D 67/00** *(2006.01)*

(21) Application number: **06732961.5**

(22) Date of filing: **23.03.2006**

(86) International application number:
**PCT/NL2006/000154**

(87) International publication number:
**WO 2006/101390 (28.09.2006 Gazette 2006/39)**

(54) **METHOD OF MAKING MICROPOROUS MEMBRANES AND IMAGE RECORDING MATERIALS COMPRISING THE SAME**

VERFAHREN ZUR HERSTELLUNG VON MIKROPORÖSEN MEMBRANEN UND DIESE AUSWEISENDE BILDAUFZEICHNUNGSMATERIALIEN

MEMBRANES MICROPOREUSES ET LEURS UTILISATION DANS DES MATÉRIAUX POUR L'ENREGISTREMENT D'IMAGES

(84) Designated Contracting States:
**DE FR GB NL**

(30) Priority: **23.03.2005 EP 05075693**

(43) Date of publication of application:
**05.12.2007 Bulletin 2007/49**

(73) Proprietor: **FUJIFILM Manufacturing Europe B.V.
5047 TK Tilburg (NL)**

(72) Inventors:
• **HESSING, Jacko
NL-5121 SV Rijen (NL)**
• **VAN BAAK, Willem, Johannes
NL-5103 BK Dongen (NL)**
• **KASE, Akira
NL-5045 MD Tilburg (NL)**

(74) Representative: **Hatzmann, Martin et al
Vereenigde
Johan de Wittlaan 7
2517 JR Den Haag (NL)**

(56) References cited:
EP-A- 1 418 058          WO-A-01/92023
WO-A-99/21723          US-A- 4 466 931

**Description**

**Field of the invention**

The present invention relates to processes for preparing microporous membranes by curing compounds through radiation. The invention further relates to image recording materials, in which these microporous membranes are used.

**Background of the invention**

There are various ways to produce contemporary recording media. Such media should be able to compete with conventional silver halide based image recording systems for properties such as image resolution, color reproduction, color fastness and the like. A specific problem related to recording materials to which solvent based colorants are applied, such as inkjet recording media, is the specific problem of dealing with the solvent during or after application of the colorant. Important parameters related to this problem are speed of solvent uptake and solvent uptake capacity. Failure to optimize these parameters causes undesired effects such as smearing or smudging, beading, matting and the like.

One way to accommodate the bulk of the solvent load originating from the applied colorant is the use of a layer containing a swellable polymer such as for example a (crosslinked) gelatin, PVA, PVP and such. Another way to accommodate the solvent load is the use of a (micro-)porous layer. EP-A-1 289 767, EP-A-1 418 058 and EP-A-1 477 318 disclose layers, cured by UV or other radiation in which the micropores must contain organic or inorganic particles in order to obtain sufficient solvent uptake. However, application of inorganic particles can cause physical weakness of the layer, resulting in cracking or breaking of the layer.

EP-A-0 738 608 describes curing compositions containing a water soluble high-molecular weight compound, but these compositions yield solid layers.

WO-A-99/21723 discloses a substrate coated with a binder dissolved in an aqueous solvent mixture, which layer is then cured by electron beam radiation, and teaches that any amount of solvent is suitable, preferably a solution is used with a solid content lower than 20 %.

WO-A-01/91999 discloses a curable inkjet coating that is cured after drying the coating.

WO-A-01/92023 describes a method of making a coated substrate, wherein a coating material comprising radiation curable material and particulate material in a liquid carrier are applied to a surface and subsequently irradiated while still wet to form a porous coating on the substrate.

Another method is the application of foamed layers as in for example EP-A-0 888 903.

In the above mentioned prior art the receiving layer is not isolated but formed directly on the substrate after drying and/or further manipulation of the coated substrate. It would be advantageous, to be able to isolate such a layer as a membrane which can be used as such or which can be applied to a substrate in a separate process to give advantageous properties. Membranes are produced by many methods such as dry and wet phase inversion of polymeric solutions, stretching of homogeneous, partially crystalline polymer films, sintering of particulate materials, thermal gelation of homogeneous polymer solutions and by radical polymerization with simultaneous phase separation by irradiation or thermal initiation. Of these methods the wet phase inversion method - in which a polymer solution is contacted with a precipitating agent or non-solvent causing separation into a solid polymer-rich phase and a liquid solvent-rich phase - is by far the most widely used technique for obtaining porous structures. Examples in which this technique is applied can be found in US-A-5 079 272 and EP-B-0 803 533. The main disadvantages of wet phase inversion are the limited production speed obtainable and the high amounts of organic solvents required. An alternative method is disclosed in US-A-4 466 931 and in EP-B-0 481 517 describing a membrane which is produced by irradiating curable monomers in non-volatile organic solvents which are to be removed by washing with a washing liquid of low boiling point. As many curable compounds are hydrophobic in nature they require organic apolar solvents to obtain a clear solution. Non-volatile solvents are difficult to remove and thus are not preferred.

There is a need for a membrane that can be produced at high speeds without requiring costly measures to guarantee safety and to prevent pollution of the environment. It is towards this goal, that this invention is directed.

**Summary of the invention**

It is an object of this invention to provide microporous membranes with a high flux with limited fouling.

It is a further object of the invention to provide such a membrane with high structural integrity.

It is also an object of the invention to provide recording materials with high solvent uptake capacity and solvent uptake speed.

It is further an object of the invention to provide an inkjet recording sheet having excellent light, ozone and water fastness and have a high gloss, which sheet can accommodate high solvent loads associated with printing high color densities.

It also an object of this invention to provide a method of producing membranes with high production speed.

Surprisingly, it has been found that one or more of the above objects can be met by a microporous membrane obtainable by the steps of providing a mixture of at least one type of curable compound and a volatile aqueous solvent in an effective concentration (preferably of between 0.2 and 0.8 grams of compound per gram of the mixture) wherein at least 30 weight percent of said solvent is water; applying said mixture to a support; curing said curable compound mixture by exposing to radiation, thereby causing phase separation between the crosslinked curable compound and the solvent; removing said solvent by drying and/or washing the resulting microporous membrane; and optionally separating the support and the microporous membrane.

In a further embodiment the resulting microporous layer is not separated from the support, resulting in a support provided with a microporous membrane layer, which can be used as a recording medium.

## Detailed description

Up to now, most image recording materials in which solvent based colorants are applied to a support to generate text or images relied on either swellable (polymeric) layers that accommodate the applied solvent by letting the solvent swell the polymeric structure, or on microporous layers based on solvent-absorbing or microporous particles. Layers that contain particles have the disadvantage that higher particle loads can reduce structural integrity of the layer. Also it is difficult to achieve a good gloss with layers that are microporous.

We unexpectedly found that a microporous membrane can be prepared that can accommodate the high amounts of solvent associated with printing high density areas as in for example inkjet recording media while maintaining the benefits, as of for example high gloss, of a swellable layer, by careful selection of the concentration and composition of a curable compound mixture, coating said mixture on a substrate, curing that curable compound mixture, thereby causing phase separation between the crosslinked curable compound and the solvent after which a substrate provided with a microporous layer is formed and subjecting the resulting composition to a drying step. Optionally the membrane may be washed to remove non-crosslinked components from the cured compound mixture. A mixture in this context is defined as any kind of possible state of a compound in a solution. So mixtures comprise solutions, suspensions, dispersions and so on.

When coating such a mixture comprising a curable compound on a substrate, followed by the subsequent steps of curing the mixture, drying the resulting microporous layer and optionally separating the microporous layer from the substrate, a microporous membrane can be obtained which can be used in various applications and which is characterized by its high solvent flux and/or uptake capability. If separated the microporous membrane of the preset invention can be fixed afterwards to all kinds of supports resulting in media with a high structural integrity and an excellent water uptake capability. Separation from the substrate can be easily achieved by proper treatment of the substrate before coating the curable compound mixture on the substrate. The isolated microporous membrane obtainable by this invention can be separately attached to a substrate via an adhesive layer. This adhesive layer can also impart certain properties to the resulting medium.

In another embodiment a substrate is coated with two or more layers of a curable compound mixture. By this method microporous membranes can be designed with varying properties throughout the microporous membrane. So an outer layer can be designed having colorant fixing properties, a high gloss and/or anti-fouling properties and an inner microporous layer can be constructed having an optimized water flux or uptake capability.

In general the dry thickness of the microporous membrane obtainable by this invention in isolated form may typically be between 30 $\mu$m and 500 $\mu$m, more preferably between 50 and 400 $\mu$m. When adhered to a substrate the membrane need not give internal strength and the optimal thickness is based on properties such as solvent uptake capacity or flux. In the latter case the dry thickness is typically between 5 and 50 $\mu$m. When the substrate is impermeable to aqueous solvents - e.g. when used for high quality inkjet recording media - the dry thickness is preferably between 20 and 50 $\mu$m, while when the substrate is able to absorb part of the solvent as is the case for e.g. (coated) base paper the preferred dry thickness is between 5 and 30 $\mu$m. When the porous layer is a multilayer the thickness of the various layers can be selected freely depending on the properties one likes to achieve.

Suitable curable compounds are preferably water reducible to form an aqueous solution but can also be dispersible in water or an aqueous solution or can be present as a suspension. Not only for safety reasons, also for considerations of health and environment and from economic viewpoint water is the most preferred solvent. Many curable compounds are hydrophobic in nature and require non-aqueous (organic) solvents to obtain a clear solution. Non-volatile solvents are difficult to remove and are not preferred while volatile organic solvents are not preferred either since these may result in hazardous conditions in the production area during the drying phase of the membrane and thus their use should be minimized. A compound is regarded as water reducible when at 25 °C at least 2 wt.% of water is compatible with the curable compound. Preferably water is miscible with the curable compounds of the invention in a ratio of at least 10:90. An adequate water reducibility makes it possible to limit the amount of co-solvents needed to obtain a clear solution. The solvent comprises at least 30 weight percent of water, *i.e.* up to 70 weight percent of co-solvents, more preferably at least 50 weight percent of water, and may further comprise other polar or apolar co-solvents. In case the miscibility with water is not sufficient to dissolve the curable compound completely, admixing of one or more co-solvents is desirable. Preferably the solvent contains at least 60 weight percent, preferably at least 70 weight percent and more preferably at least 80 weight percent of water. In a special embodiment the solvent is water and does not contain organic co-solvents. For example, 10 wt.% CN132 and 27.5 wt.% CN435 and 62.5 wt.% water, or 21.5 wt.% CN132 and 21.5 wt.% CN435 and 57 wt.% water, or 60 wt.% CN132 and 40 wt.% water, or 49.75 wt.% CN132, 49.75 wt.% water and 0.5 wt.% dodecyltrimethylammonium chloride can give a favorable microporous matrix. CN132 and CN435 are curable compounds available from Cray Valley, France. CN132 is a low viscosity aliphatic epoxy acrylate. CN435 (available in the US as SR9035) is an ethoxylated trimethylolpropane triacrylate.

As co-solvents, polar volatile solvents that can be sufficiently removed by drying are preferred. Preferred co-solvents are lower alkyl alcohols, alkanones, alkanals, esters, or alkoxy-alkanes. A lower alkyl means that the alkyl chain contains less than 7, preferably less than 6 and more preferably less than 5 carbon atoms, most preferably 1-4 carbon atoms. In one embodiment the solvent is a mixture of isopropanol and water. Other suitable co-solvents are e.g. methanol, ethanol, 1-propanol, acetone, ethylacetate, dioxane, methoxy ethanol, tetrahydrofuran, ethylene glycol and dimethylformamide. Most preferred are co-solvents having a boiling point lower than that of water.

Curable compounds used in the invention are described for example in "Development of ultraviolet and electron beam curable materials" (Y. Tabata, CMC publishing, 2003) and may be selected from, but are not limited to epoxy compounds, oxetane derivatives, lactone derivatives, oxazoline derivatives, cyclic siloxanes, or ethylenically unsaturated compound such as acrylates, methacrylates, polyene-polythiols, vinylethers, vinylamides, vinylamines, allyl ethers, allylesters, allylamines, maleic acid derivaties, itacoic acid derivaties, polybutadienes and styrenes. Preferably as the main components (meth)acrylates are used, such as alkyl-(meth)acrylates, polyester-(meth)acrylates, urethane-(meth)acrylates, polyether-(meth)acrylates, epoxy-(meth)acrylates, polybutadiene-(meth)acrylates, silicone-(meth)acrylates, melamine-(meth)acrylates, phosphazen-(meth)acrylates, (meth)acrylamides and combinations thereof. Other types of curable compounds may be combined with the main component in order to modify certain characteristics of the resulting membrane. These compounds can be used in the form of a monomer solution, monomer suspension, monomer dispersion, oligomer solution, oligomer suspension, oligomer dispersion, polymer solution, polymer suspension and polymer dispersion. Most preferred are mono-, di- or multifunctional ethylenically unsaturated compounds comprising one or more acrylate or methacrylate groups, or combinations thereof.

In order to achieve the microporous membrane according to the invention the curable composition and the processing conditions have to be selected with care. Upon irradiation the curable monomers (or oligomers or prepolymers) crosslink to form polymers. During this process the solubility of the growing polymer in the solvent decreases resulting in phase separation: the polymer separates from the solution. Finally the polymer forms a network with a microporous structure wherein the solvent fills the pores. Upon drying the solvent is removed and a microporous membrane remains. The membrane may be subsequently washed to remove uncured components. Optionally the solvent is removed by a washing step prior to drying. To obtain an optimal structure of the microporous membrane it is important to carefully select the concentration of the curable compound or mixture of curable compounds. When the concentration is too low (lower than 20 weight percent) it is assumed that upon curing no network structure is formed and when the concentration is too high (higher than 80 weight percent) experiments indicate that a more or less homogenous gelled layer is formed that yields a non-porous, transparent layer after drying. A microporous structure is essential for a quick solvent uptake or a high flux. The concentration of the curable compound or compounds in the solvent is between 20 and 80 weight percent, preferably between 30 and 60 weight percent. The solubility of the curable compound in the solvent is another parameter of importance. Preferably the curable composition is a clear solution. The solvent can be chosen such that the selected curable compound or compound mixture is completely dissolved. A clear solution is important when a membrane with a high gloss is desired. When a matte surface is aimed at, a turbid solution may be used and the solvent can be selected accordingly. On the other hand for phase separation to occur the growing polymer should be insoluble in the solvent. This puts certain restrictions to the curable compounds that can be selected in combination with a certain solvent.

To obtain a large difference in solubility between the initial compounds and the resulting polymer and thus a fast phase separation preferably the molecular weight (MW) of the initial compounds is not too large, although also with high-MW polymers porous membranes can be realized by careful selection of the solvent. Preferably the MW of the curable monomers or oligomers is less than 10 000 Dalton, more preferably less than 5 000 Dalton. Good results are obtained with compounds having a MW of less than 1 000 Dalton.

For example, in case of epoxy diacrylate (CN132, supplied by Cray Valley) it was found that the concentration in water/isopropanol (in a ratio between about 6:1 to about 4:1 based on weight) is preferably 38 +/- 15 weight percent, more preferably 38 +/- 10 weight percent and most preferably 38 +/- 5 weight percent. The centre value of '38' in case of epoxy diacrylate may be different for other curable compounds or mixtures of curable compounds. For instance when the epoxy diacrylate is partly replaced by a more water-soluble curable monomer it is possible to increase the water/isopropanol ratio and/or the concentration of the curable compounds.

It is also possible to tune the centre value by changing the monomer system, or by changing the solvent system, or by addition of additives. For example, the centre value of '50' can be achieved by using mixture of monomers CN132 and CN435 (in a ratio of 1/1) with water, or only CN132 with a water/isopropanol mixture with a ratio of 9/1, or by addition of a surfactant like dodecyltrimethylammonium chloride or sodium dodecylbenzene sulfonate. The centre value of '60' can be achieved by using only CN132 with water.

Another acrylate, namely polyurethane-acrylate, dispersed in water forms a microporous membrane after curing in a concentration similar to epoxy-diacrylate. It is impossible to predict this centre value for every possible curable compound and solvent combination since countless combinations of monomers or oligomers with solvent mixtures are possible. However, a skilled person can easily determine the concentration range for a given curable compound within which a microporous membrane is obtained, now that it is clear that such a selection is essential to obtain a microporous membrane. Possible methods that can facilitate the selection of suitable combinations are described in e.g. EP-A-0216622 (cloud point) and US-A-3823027 (Hansen system).

In accordance with the present invention, a membrane is referred to as "microporous" if it contains a substantial amount of pores preferably having a diameter of between 0.001 and 2.0 $\mu$m. More preferably the majority of the pores of the microporous membrane of the invention have a size of between 0.003 and 1.0 $\mu$m and even more preferably between 0.01 and 0.7 $\mu$m. There is no preference for the pore shape. The pores can be spherical or irregular or a combination of both. Preferably the pores are inter-connected, since this will contribute to a quick solvent absorption and a high flux.

The wet porosity of the membrane is preferably between 5 and 90 percent as determined by analysing SEM cross-section images and measuring the swelling in water of 20 °C. Due to the hydrophilic character of the polymers constituting the membrane many membranes swell in aqueous solvents. Because the wet condition is the realistic operational situation for a membrane the wet porosity is specified. The wet porosity is determined by the following formula:

$$(\text{Wet thickness / coated amount solids} * 100\,\%) - 100\,\%$$

The dry thickness is determined from SEM cross-section images; the wet thickness is determined by adding the swelling amount to the dry thickness. The swelling amount is determined by swelling the layer in water of 20 °C and recording the height increase using a needle. In case the membrane does not swell the wet porosity will be identical to the dry porosity. More preferably the wet porosity is between 35 and 85 percent, and even more preferably the wet porosity is at least 50 percent.

Photo-initiators may be used in accordance with the present invention and can be mixed to the mixture of the curable compound(s), preferably prior to applying the mixture to the support. Photo-initiators are required when the coated mixture is cured by UV or visible light radiation. Suitable photo-initiators are those known in the art such as radical type, cation type or anion type photo-initiators.

Examples of radical type I photo-initiators are $\alpha$-hydroxyalkylketones, such as 2-hydroxy-1-[4-(2-hydroxyethoxy) phenyl]-2-methyl-1-propanone (Irgacure™ 2959: Ciba), 1-hydroxy-cyclohexyl-phenylketone (Irgacure™ 184: Ciba), 2-hydroxy-2-methyl-1-phenyl-1-propanone (Sarcure™ SR1173: Sartomer), oligo[2-hydroxy-2-methyl-1-{4-(1-methylvinyl) phenyl}propanone] (Sarcure™ SR1130: Sartomer), 2-hydroxy-2-methyl-1-(4-tert-butyl-)phenylpropan-1-one, 2-hydroxy-[4'-(2-hydroxypropoxy)phenyl]-2-methylpropan-1-one, 1-(4-Isopropylphenyl)-2-hydroxy-2-methyl-propanone (Darcure™ 1116: Ciba); $\alpha$-aminoalkylphenones such as 2-benzyl-2-(dimethylamino)-4'-morpholinobutyrophenone (Irgacure™ 369: Ciba), 2-methyl-4'-(methylthio)-2-morpholinopropiophenone (Irgacure™ 907: Ciba); $\alpha,\alpha$-dialkoxyacetophenones such as $\alpha,\alpha$-dimethoxy-a-phenylacetophenone (Irgacure™ 651: Ciba), 2,2-diethoxy-1,2-diphenylethanone (Uvatone™ 8302: Upjohn), $\alpha,\alpha$-diethoxyacetophenone (DEAP: Rahn), $\alpha,\alpha$-di-(n-butoxy)acetophenone (Uvatone™ 8301: Upjohn); phenylglyoxolates such as methylbenzoylformate (Darocure™ MBF: Ciba); benzoin derivatives such as benzoin (Esacure™ BO: Lamberti), benzoin alkyl ethers (ethyl, isopropyl, n-butyl, iso-butyl, etc.), benzylbenzoin benzyl ethers, Anisoin; mono- and bis-Acylphosphine oxides, such as 2,4,6-trimethylbenzoyl-diphenylphosphine oxide (Lucirin™ TPO: BASF), ethyl-2,4,6-trimethylbenzoylphenylphosphinate (Lucirin™ TPO-L: BASF), bis(2,4,6-trimethylbenzoyl)-phenylphosphine oxide (Irgacure™ 819: Ciba).

Examples of type II photo-initiators are benzophenone derivatives such as benzophenone (Additol™ BP: UCB), 4-hydroxybenzophenone, 3-hydroxybenzophenone, 4,4'-dihydroxybenzophenone, 2,4,6-trimethylbenzophenone, 2-methylbenzophenone, 3-methylbenzophenone, 4-methylbenzophenone, 2,5-dimethylbenzophenone, 3,4-dimethylbenzophenone, 4-(dimethylamino)benzophenone, [4-(4-methylphenylthio)phenyl]phenylmethanone, 3,3'-dimethyl-4-methoxy benzophenone, methyl-2-benzoylbenzoate, 4-phenylbenzophenone, 4,4-bis(dimethylamino)benzophenone, 4,4-bis (diethylamino)benzophenone, 4,4-bis(ethylmethylamino)benzophenone, 4-benzoyl-N,N,N-trimethylbenzenemethanaminium chloride, 2-hydroxy-3-(4-benzoylphenoxy)-N,N,N-trimethyl-1-propanamium chloride, 4-(13-Acryloyl-1,4,7,10,13-pentaoxatridecyl)benzophenone (Uvecryl™ P36: UCB), 4-benzoyl-N,N-dimethy-N-[2-(1-oxo-2-propenyl)oy]ethylbenzenemethanaminium chloride, 4-benzoyl-4'-methyldiphenyl sulphide, anthraquinone, ethylanthraquinone, anthraquinone-2-sulfonic acid sodium salt, dibenzosuberenone; acetophenone derivatives such as acetophenone, 4'-phenoxyacetophenone, 4'-hydroxyacetophenone, 3'-hydroxyacetophenone, 3'-ethoxyacetophenone; thioxanthenone derivatives such as thioxanthenone, 2-chlorothioxanthenone, 4-chlorothioxanthenone, 2-isopropylthioxanthenone, 4-isopropylthioxanthenone, 2,4-dimethylthioxanthenone, 2,4-diethylthioxanthenone, 2-hydroxy-3-(3,4-dimethyl-9-oxo-9H-thioxanthon-2-yloxy)-N,N,N-trimethyl-1-propanaminium chloride (Kayacure™ QTX: Nippon Kayaku); diones such as benzyl, camphorquinone, 4,4'-dimethylbenzyl, phenanthrenequinone, phenylpropanedione; dimethylanilines such as 4,4',4"-methylidyne-tris(N,N-dimethylaniline); imidazole derivatives such as 2,2'-bis(2-chlorophenyl)-4,4',5,5'-tetraphenyl-1,2'-bisimidazole; titanocenes such as bis(eta-5-2,4-cyclopentadiene-1-yl)-bis-[2,6-difuluoro-3-1H-pyrrol-1-yl]phenyl]titanium (Irgacure™ 784: Ciba); iodonium salt such as iodonium, (4-methylphenyl)-[4-(2-methylpropyl-phenyl)-hexafluorophosphate (1-). If desired combinations of photo-initiators may also be used.

For acrylates, diacrylates, triacrylates or multifunctional acrylates, type I photo-initiators are preferred, especially alpha-hyclioxyalkylphenones, such as 2-hydroxy-2-methyl-1-phenyl propan-1-one, 2-hydroxy-2-methyl-1-(4-tert-butyl-)phenylpropan-1-one, 2-hydroxy-[4'-(2-hyclioxypropoxy)phenyl]-2-methylpropan-1-one, 2-hydroxy-1-[4-(2-hydroxyethoxy)phenyl]-2-methyl propan-1-one, 1-hydroxycyclohexylphenylketone and oligo[2-hydroxy-2-methyl-1-{4-(1-methylvinyl)phenyl}propanone], or acylphosphine oxides such as 2,4,6-trimethylbenzoyl-diphenylphosphine oxide, ethyl-2,4,6-trimethylbenzoylphenylphosphinate and bis(2,4,6-trimethylbenzoyl)-phenylphosphine oxide, are preferred. Preferably the ratio of photo-initiator and curable compound(s) is between 0.001 and 0.1, more preferably between 0.005 and 0.05, based on weight. When more than one layer is applied in each layer the type and concentration of photo-initiator can be chosen independently. For example, in a multilayer structure the photo-initiator in the top layer may be different from the photo-initiator in lower layer(s) which can give more efficient curing with low initiator concentrations than when a single initiator is applied throughout all layers. It is generally known that some types of photo-initiator are most effective in curing the surface while other types cure much deeper into the layer when irradiated with radiation. For the lower layers a good through cure is important and for a high efficiency of curing it is preferred to select a photo-initiator that has an absorption spectrum not fully overlapping with the spectrum of the photo-initiator applied in the top layer. Preferably the difference in absorption maximum between photo-initiators in the top layer and in the bottom layer is at least 20 nm. In the case UV radiation is used a light source can be selected having emissions at several wavelengths. The combination of UV light source and photo-initiators can be optimized so that sufficient radiation penetrates to the lower layers to activate the photo-initiators. A typical example is an H-bulb with an output of 600 Watts/inch as supplied by Fusion UV Systems which has emission maxima around 220 nm, 255 nm, 300 nm, 310 nm, 365 nm, 405 nm, 435 nm, 550 nm and 580 nm. Of these the emissions between 200 and 450 nm are the most important for the curing reaction. It is obvious that there need to be sufficient overlap between the spectrum of the UV light source and that of the photo-initiators. This method allows for thicker layers to be cured efficiently with the same intensity of irradiation. Additionally by applying different types of photo-initiator characteristics such as gloss and porosity can be optimized to levels not possible with a single type of photo-initiator.

The curable compound mixture is subjected to radiation to obtain the microporous membrane. In principle (electromagnetic) radiation of any suitable wavelength can be used, such as for example ultraviolet, visible or infrared radiation, as long as it matches the absorption spectrum of the photo-initiator, when present or as long as enough energy is provided to directly cure the curable compound without the need of a photo-initiator. Curing by infrared radiation is also known as thermal curing. Thus curing polymerization may be effectuated by combining the ethylenically unsaturated monomers with a free radical initiator and heating the mixture. Exemplary free radical initiators are organic peroxides such as ethyl peroxide and benzyl peroxide; hydroperoxides such as methyl hydroperoxide, acyloins such as benzoin; certain azo compounds such as $\alpha,\alpha'$-azobisisobutyronitrile and $\gamma,\gamma'$-azobis(y-cyanovaleric acid); persulfates; peracetates such as methyl peracetate and tert-butyl peracetate; peroxalates such as dimethyl peroxalate and di(tert-butyl) peroxalate; disulfides such as dimethyl thiuram disulfide and ketone peroxides such as methyl ethyl ketone peroxide. Temperatures in the range of from about 23 °C to about 150 °C are generally employed. More often, temperatures in the range of from about 37 °C to about 110 °C are used.

Irradiation by ultraviolet light is preferred. Suitable wavelengths are for instance UV-A (400-320 nm), UV-B (320-280 nm), UV-C (280-200 nm), provided the wavelength matches with the absorbing wavelength of the photo-initiator, if present.

Suitable sources of ultraviolet light are mercury arc lamps, carbon arc lamps, low pressure mercury lamps, medium pressure mercury lamps, high pressure mercury lamps, swirlflow plasma arc lamps, metal halide lamps, xenon lamps, tungsten lamps, halogen lamps, lasers and ultraviolet light emitting diodes. Particularly preferred are ultraviolet light emitting lamps of the medium or high pressure mercury vapor type. Additional to mercury additives such as metal halides may be present to modify the emission spectrum of the lamp. In most cases lamps with emission maxima between 200 and 450 nm are most suitable.

The energy output of the exposing device may be between 20 and 240 W/cm, preferably between 40 and 150 W/cm, but may be higher as long as the desired exposure dose is realized. The exposure intensity is one of the parameters that can be used to control the extent of curing which influences the final structure of the membrane. Preferably the exposure dose is at least 40 mJ/cm$^2$, more preferably between 40 and 600 mJ/cm$^2$, most preferably between 70 and 220 mJ/cm$^2$ as measured by an High Energy UV Radiometer (UV Power Puck™ from EIT - Instrument Markets) in the UV-B range indicated by the apparatus. Exposure times can be chosen freely but need not be long and are typically less than 1 second.

In case no photo-initiator is added, the curable compound can be advantageously cured by electron-beam exposure as is known in the art. Preferably the output is between 50 and 300 keV. Curing can also be achieved by plasma or corona exposure.

Where desired, a surfactant or combination of surfactants may be added to the aqueous composition as a wetting agent, to adjust surface tension, or for other purposes such as a good gloss. It is within the ability of one skilled in the art to employ a proper surfactant depending upon desired use and the substrate to be coated. Commercially available surfactants may be utilized, including radiation-curable surfactants. Surfactants suitable for use in the curable composition include nonionic surfactants, ionic surfactants, amphoteric surfactants and combinations thereof. Preferred nonionic surfactants include ethoxylated alkylphenols, ethoxylated fatty alcohols, ethylene oxide/propylene oxide block copolymers, fluoroalkyl ethers, and the like. Preferred ionic surfactants include, but are not limited to, the following: alkyltrimethylammonium salts wherein the alkyl group contains from 8 to 22 (preferably 12 to 18) carbon atoms; alkylbenzyldimethylammonium salts wherein the alkyl group contains from 8 to 22 (preferably 12 to 18) carbon atoms, and ethylsulfate; and alkylpyridinium salts wherein the alkyl group contains from 8 to 22 (preferably 12 to 18) carbon atoms. Surfactants may be fluorine based or silicon based. Examples of suitable fluorosurfactants are: fluoro $C_2$-$C_{20}$ alkylcarboxylic acids and salts thereof, disodium N-perfluorooctanesulfonyl glutamate, sodium 3-(fluoro-C6-$C_{11}$ alkyloxy)-1-$C_3$-$C_4$ alkyl sulfonates, sodium 3-(omega-fluoro-$C_6$-$C_8$ alkanoyl-N-ethylamino)-1-propane sulfonates, N-[3-(perfluorooctanesulfonamide)-propyl]-N,N-dimethyl-N-carboxymethylene ammonium betaine, perfluoro alkyl carboxylic acids (e.g. $C_7$-$C_{13}$-alkyl carboxylic acids) and salts thereof, perfluorooctane sulfonic acid diethanolamide, Li, K and Na perfluoro $C_4$-$C_{12}$ alkyl sulfonates, Li, K and Na N-perfluoro $C_4$-$C_{13}$ alkane sulfonyl-N-alkyl glycine, fluorosurfactants commercially available under the name Zonyl® (produced by E.I. Du Pont) that have the chemical structure of RfCH$_2$CH$_2$SCH$_2$CH$_2$CO$_2$Li or RfCH$_2$CH$_2$O(CH$_2$CH$_2$O)$_x$H wherein Rf = F(CF$_2$CF$_2$)$_{3-8}$ and x = 0 to 25, N-propyl-N-(2-hydroxyethyl)perfluorooctane sulfonamide, 2-sulfo-1,4-bis(fluoroalkyl)butanedioate, 1,4-bis (fluoroalkyl)-2-[2-N,N,N-trialkylammonium) alkyl amino] butanedioate, perfluoro $C_6$-$C_{10}$ alkylsulfonamide propyl sulfonyl glycinates, bis-(N-perfluorooctylsulfonyl-N-ethanolaminoethyl)phosphonate, mono-perfluoro $C_6$-$C_{16}$ alkyl-ethyl phosphonates, and perfluoroalkylbetaine. Also useful are the fluorocarbon surfactants described e.g. in US-A-4 781 985 and in US-A-5 084 340.

Silicon based surfactants are preferably polysiloxanes such as polysiloxane-polyoxyalkylene copolymers. Such copolymers may be for example dimethylsiloxane-methyl (polyoxyethylene) copolymer, dimethylsiloxane-methyl (polyoxyethylene-polyoxypropylene) siloxane copolymer, trisiloxane alkoxylate as a copolymer of trisiloxane and polyether, and siloxane propoxylate as a copolymer of siloxane and polypropylene oxide. The siloxane copolymer surfactants may be prepared by any suitable method, known to the skilled person, and can be prepared as random, alternate, block, or graft copolymers. The polyether siloxane copolymer preferably has a weight-average molecular weight in a range of 100 to 10 000. Examples of polyether siloxane copolymers commercially available in the market include SILWET DA series, such as SILWET 408, 560 or 806, SILWET L series such as SILWET-7602 or COATSIL series such as COATSIL 1211, manufactured by CK WITCO; KF351A, KF353A, KF354A, KF618, KF945A, KF352A, KF615A, KF6008, KF6001, KF6013, KF6015, KF6016, KF6017, manufactured by SHIN-ETSU; BYK-019, BYK-300, BYK-301, BYK-302, BYK-306, BYK-307, BYK-310, BYK-315, BYK-320, BYK-325, BYK-330, BYK-333, BYK-331, BYK-335, BYK-341, BYK-344, BYK-345, BYK-346, BYK-348, manufactured by BYK-CHEMIE; and GLIDE series such as GLIDE 450, FLOW series such as FLOW 425, WET series such as WET 265, manufactured by TEGO.

Surfactants may be added in the curable composition and/or may be introduced by impregnation of the membrane for the purpose of improving printer transportability, blocking resistance and waterproofness. The surfactant, when used, preferably is present in an amount between 0.01 and 2 % based on the dry weight of the membrane, more preferably between 0.02 and 0.5 %. Preferably the surfactants are soluble in the composition in the concentration used.

The porous membrane may also comprise one or more non-curable water soluble polymers and/or one or more hydrophilic polymers that are not crosslinked by exposure to radiation. The non-curable water soluble polymer may be added to the curable compound mixture before or after curing.

It is also possible to add the non-curable water soluble polymer into the microporous membrane by impregnation, after at least partially drying the membrane or by coating the non-curable water soluble polymer solution onto the microporous membrane layer before drying, allowing the non-curable water soluble polymer to at least partially penetrate the microporous membrane.

The microporous membrane obtainable by the invention may comprise up to 40 gram of a non-curable water soluble polymer per 100 gram of the dry layer. More preferably the amount of non-curable water soluble polymer is between 0.5 and 10 gram per 100 gram of the membrane.

Suitable water soluble polymers are described in for example EP-A-1 437 229. Thus the water soluble polymer may be one or more of a polyvinyl alcohol-based resin which is a resin having a hydroxy group as a hydrophilic structure unit: fully or partially hydrolyzed polyvinyl alcohol (PVA), acetoacetyl-modified polyvinyl alcohol, cation-modified polyvinyl alcohol, anion-modified polyvinyl alcohol, silanol-modified polyvinyl alcohol, polyvinyl acetal and the like; a cellulose-based resin such as alkyl cellulose (methyl cellulose, ethyl cellulose), hydroxyalkyl cellulose (hydroxyethyl cellulose, hydroxypropyl cellulose, hydroxyethylmethyl cellulose, hydroxypropylmethyl cellulose), carboxyalkyl cellulose (carboxymethyl cellulose), and the like); dextrin, casein, gum arabic, dextran, chitins, chitosans, starches, ether bond-carrying resins (polyoxyethylene oxide (PEO), polypropylene oxide (PPO), polyethylene glycol (PEG), polyvinyl ether (PVE) and the like), a carbamoyl group-carrying resin (polyacrylamide (PAAM), polyvinyl pyrrolidone (PVP), carboxylic acids such as acrylic acid, methacrylic acid, polyacrylic acid, polymethylacrylic acid, polyacrylic acid hydrazide and its copolymers or terpolymers); polymers of 2-pyrrolidone and its derivatives such as N-(2-hydroxyethyl)-2-pyrrolidone and N-cyclohexyl-2-pyrrolidone, urea and its derivatives such as imidazolidinyl urea, diazolidinyl urea, 2-hydroxyethylethylene urea, and ethylene urea; as well as polyacrylates having carboxyl groups as free groups, maleic acid and crotonic acid resins, alginates, gelatins and the like. Preferred non-curable water soluble polymers are polyvinylalcohol or (partly) saponified polyvinylalcohol. Suitable copolymers of PVA are disclosed in WO-A-03/054029, like for example PVA-NVF copolymers. The quantity of these water soluble polymer or polymer mixtures is preferably from 0.2 to 30.0 $g/m^2$, more preferably from 1.0 to 20.0 $g/m^2$.

Also preferred as non-curable water soluble polymers are gelatins or modified gelatins. Gelatins with high isoelectric point can be used as described in WO-A-2005/032837. Also acid type gelatins can be advantageously applied as described in WO-A-2005/032836. The term "modified gelatin" as used herein refers to gelatin compounds in which at least part of the $NH_2$ groups is chemically modified. A variety of modified gelatins can be used like phthalated and acetylated gelatins and the like. Good results are obtained, when at least 30 % of the $NH_2$ groups of the gelatin are modified by a condensation reaction with a compound having at least one carboxylic group as described among others in DE-A-19721238. The compound having at least one carboxylic group can have an other functional group like a second carboxylic group and a long aliphatic tail, which in principle is not modified. Long tail in this context means from at least 5 to as much as 20 carbon atoms. This aliphatic chain can be modified still to adjust the properties such as the water solubility and ink receptivity. Specially preferred gelatins of this type are succinic acid modified gelatins in which the succinic acid moiety contains an aliphatic chain from at least 5 to 20 carbon atoms, where the chain can still be modified to a certain extent to adjust the water soluble properties or ink receptive properties. Most preferred is the use of dodecenylsuccinic acid modified gelatin, in which at least 30 % of the $NH_2$ groups of the gelatin have been modified with said dodecenylsuccinic acid.

Other suitable methods for obtaining the modified gelatin are described in EP-A-0576911, by V.N. Izmailova, et al. (Colloid Journal, vol. 64, No. 5, 2002, page 640-642), and by O. Toledano, et al. (Journal of Colloid and Interface Science vol.: 200, 1998, page 235-240).

Other suitable modified gelatins giving good results are gelatins modified to have quaternary ammonium groups. An example of such a gelatin is the "Croquat™" gelatin produced by Croda Colloids Ltd.

Gelatins that may be used as the starting point for modified gelatin may include any known gelatin whether lime-processed or acid processed and can for instance be selected from the group of lime treated bone or hide gelatin of pig, cattle or fish, recombinant gelatin, or combinations thereof.

The addition of the non-curable water soluble polymer may serve to increase the hydrophilicity of the microporous membrane. Increased hydrophilicity means that the wettability of the porous membrane in improved resulting in a better solvent uptake. Wettability is measured by dropping 50 picoliter of demineralized water from 1 cm above the membrane and measure the contact angle at 1 millisecond after the droplet touched the membrane. This measurement is done at 25 °C, 1 atm. Preferably the contact angle as measured by this method is less than 80°, preferably between 5° and 50°.

In addition to a non-curable water soluble polymer, up to 20 weight percent crosslinking agent may be added, preferably between 0.5 and 5 weight percent, based on the amount of non-curable water soluble polymer in the layer. Suitable crosslinking agents are described in EP-A-1 437 229. Thus the crosslinking agent may be one or more of aldehyde-based compound such as formaldehyde, glyoxal, glutaraldehyde and the like; a ketone-based compound such as diacetyl, cyclopentanedione and the like; an activated halide such as bis(2-chlorethylurea)-2-hydroxy-4,6-dichloro-1,3,5-triazine, 2,4-dichloro-6-S-triazine sodium salt and the like; an activated vinyl compound such as divinylsulfonic acid, 1,3-vinylsulfonyl-2-propanol, N,N'-ethylenebis(vinylsulfonylacetamide); 1,3,5-triacryloylhexahydro-S-triazine and the like; an N-methylol compound such as dimethylol urea, methylol dimethylhydantoin and the like; a melamine resin (for example, methylol melamine, alkylated methylol melamine); an epoxy resin; an isocyanate compound such as 1,6-hexamethylene diisocyanate and the like; aziridine compound described in US-A-3 017 280 and US-A-2 983 611; a carboxyimide compound described in US-A-3 100 704; an epoxy-based compound such as glycerol triglycidyl ether and the like; an ethyleneimino-based compound such as 1,6-hexamethylene -N,N'-bisethyleneurea and the like; a halogenated carboxyaldehyde-based compound such as mucochloric acid, mucophenoxychloric acid and the like; a dioxane-based compound such as 2,3-dihydroxydioxane and the like; a metal-containing compound such as titanium lactate, aluminum sulfate, chromium alum, potassium alum, zirconyl acetate, chromium acetate and the like; a polyamine compound such as tetraethylene pentamine; a hydrazide compound such as adipic acid dihydrazide; a low molecular weight compound or polymer having two or more oxazoline group and the like, and can be used alone or in combination.

In one embodiment at least two mixtures are coated on a substrate of which at least one is a curable compound mixture, which after curing and drying results in a membrane comprising at least a top layer and at least a bottom layer that is located beneath the top layer, that is, closer to the substrate than the top layer. At least the top layer, and preferably also the bottom layer comprises the microporous membrane of this invention. For a two-layer membrane structure the bottom layer preferably has a dry thickness of between 3 and 50 $\mu$m, preferably between 7 and 40 $\mu$m, most preferably between 10 and 30 $\mu$m and the top layer preferably between 1 and 30 $\mu$m, preferably between 2 and 20 $\mu$m, most preferably between 4 and 15 $\mu$m. When the membrane is used as a recording medium the top layer is preferably a colorant fixing layer and the bottom layer a solvent accommodating layer.

In another embodiment a substrate is coated with at least three layers of which at least one layer, preferably the top (outer) layer is a curable compound mixture. After applying to the substrate, curing and drying a membrane comprising at least three layers is formed, which three layers then comprise at least one bottom layer with a dry thickness of between 3 and 50 $\mu$m, preferably between 5 and 40 $\mu$m, most preferably between 7 and 30 $\mu$m, at least one middle layer with a thickness of between 1 and 30 $\mu$m, preferably between 2 and 25 $\mu$m, most preferably between 3 and 15 $\mu$m, and at least one top layer above the middle layer. The top layer preferably has a dry thickness of less than 10 $\mu$m, preferably of between 0.1 and 8 $\mu$m, most preferably between 0.4 and 4 $\mu$m.

In a preferred embodiment, the substrate is coated with two, three or more curable compound mixtures, which after curing and drying results in a microporous membrane. Said mixtures may have the same or different compositions depending on the results one likes to achieve. Furthermore the curable compound mixtures might be coated simultaneously and then cured or might be coated consecutively and cured. Consecutively means, that a first mixture is coated, then cured; a second mixture is coated, then cured and so on. In the latter situation it is likely that at least a part of the second mixture is impregnating the first layer so care has to be taken that the pores of the resulting membrane do not become blocked. Preferably the mixtures are chemically different and are applied simultaneously.

Preferably at least the top layer and the layer below the top layer, more preferably all layers comprising the microporous membrane of the present invention are essentially free from organic or inorganic particles that are capable of absorbing solvent. Essentially means here that the amount or location of particles is such that there is no significant effect on solvent absorption or decrease in gloss. A quantity of less than 0.1 g/m$^2$ is regarded as essentially free. An exception are matting agents, that are added to prevent handling problems such as blocking caused by a too smooth surface and which preferably are added in the top layer of the membrane. Usually less than 0.5 wt.% of the total solid content of the microporous layer(s) is formed by matting agents.

It may be desirable to add in the top layer a matting agent (also known as anti-blocking agents) to reduce friction and to prevent image transfer when several printed inkjet media are stacked. Very suitable matting agents have a particle size from 1 to 20 $\mu$m, preferably between 2 and 10 $\mu$m. The amount of matting agent is from 0.005 to 1 g/m$^2$, preferably from 0.01 to 0.4 g/m$^2$. In most cases an amount of less than 0.1 g/m$^2$ is sufficient. The matting agent can be defined as particles of inorganic or organic materials capable of being dispersed in an aqueous composition. The inorganic matting agents include oxides such as silicon oxide, titanium oxide, magnesium oxide and aluminium oxide, alkali earth metal salts such as barium sulphate, calcium carbonate, and magnesium sulphate, and glass particles. The organic matting agents include starch, cellulose esters such as cellulose acetate propionate, cellulose ethers such as ethyl cellulose, and synthetic resins. The synthetic resins are water insoluble or sparingly soluble polymers such as (meth) acrylates, (meth)acrylamides, vinyl esters such as vinyl acetate, acrylonitrile, olefins such as ethylene, styrene, epoxy resins, polyamides, polycarbonates, phenol resins, polyvinyl carbazol or polyvinylidene chloride.

In one embodiment an image recording medium is made having an outer layer comprising a microporous membrane of the invention and a polyvinylalcohol and/or a modified polyvinyl alcohol and/or a gelatin and/or a modified gelatin, and optionally a colorant fixing layer comprising a microporous membrane of the invention and a polyvinylalcohol and/or a modified polyvinyl alcohol and/or a gelatin and/or a modified gelatine as for example "Croquat™", or one of the modified gelatins as described above; the colorant fixing layer being located between the outer layer and a substrate.

In general the microporous membrane of the invention may further comprise one or more plasticizers, such as (poly)alkylene glycol, glycerol ethers and polymer lattices with low Tg-value such as polyethylacrylate, polymethylacrylate and the like and/or one ore more conventional additives, such as described for example in EP-A-1 437 229 and EP-A-1 419 984, and in WO-A-2005/032832, WO-A-2005/032834, and WO-A-2006/011800 such as acids, mordants, biocides, pH controllers, preservatives, viscosity modifiers cq stabilisers, dispersing agents, UV absorbing agents, brightening agents, antioxidants, light stabilising agents, antistatic agents and/or anionic, cationic, non-ionic, and/or amphoteric surfactants whitening agents, initiators, inhibitors, anti-blurring agents, antifoam agents, anti-curling agents, water resistance-imparting agents and the like in accordance with the objects to be achieved.

The above-mentioned additives (plasticizers, conventional additives) may be selected from those known to a person skilled in the art and may be added in a range of preferably from 0.01 to 10 g/m$^2$. Any of the components mentioned above may be employed alone or in combination with each other. They may be added after being solubilized in water, dispersed, polymer-dispersed, emulsified, converted into oil droplets, or may be encapsulated in microcapsules.

The addition of additives can be very layer specific. A surfactant for example is preferably added at least in the top layer. Mordants for example are preferably added in the colorant fixing layer or the top layer of a recording medium, preventing diffusion of the colorant within a layer or to lower layers which can cause unsharpness. Most preferably the mordant is added only in the colorant fixing layer. The amount of mordant is preferably from 0.01 $g/m^2$ to 5 $g/m^2$, more preferably from 0.25 $g/m^2$ to 4 $g/m^2$.

In a further embodiment a superabsorber polymer (SAP) can be used to enhance the solvent uptake capacity. In this invention SAP is defined as a polymer which water absorbing capacity is 50-1000 times its dry weight. The water absorption is measured by soaking for 24 hours at 25 °C, 1 atm, an amount of SAP particles in demineralized water, measure the weight after 24 hours and compare that with the weight before soaking. Examples of superabsorbers are described in JP57-173194 and JP58-024492. The superabsorbers more specifically can be selected from sodium polyacrylate, lithium polyacrylate, potassium polyacrylate, vinylalcohol-acrylamide copolymer, sodium acrylate-acrylamide copolymer, cellulose polymer, isobuthylene-maleic acid anhydride copolymer, vinylalcohol-acrylic acid copolymer, modified polyethylene oxide, polydiallyldimethylammonium salt, polyacrylate quarternary ammonium salt, sodium polymethacrylate, lithium polymethacrylate, potassium polymethacrylate, vinylalcohol-methacrylamide copolymer, sodium methacrylate-acrylamide copolymer, sodium acrylate-methacrylamide copolymer, sodium methacrylate-methacrylamide copolymer, vinylalcohol-metacrylic acid copolymer, polymethacrylate quarternary ammonium salt, - among which polyacrylic acid and/or its salt, polymethacrylic acid and/or its salt, copolymer of acrylamide and polyacrylic acid and/or its salt, copolymer of acrylamide and polymethacrylic acid and/or its salt are preferred.

The superabsorbers are preferably added as organic polymer particles of which the particle size is preferably from 0.01 to 10 micrometer, more preferably from 0.02 to 5 micrometer and most preferably from 0.03 to 2 $\mu$m. The amount used is preferably from 1 to 70 $g/m^2$, more preferably from 2 to 50 $g/m^2$ and most preferably from 3 to 30 $g/m^2$.

The SAP can be added preferably in a separate layer below the microporous outer layer.

As the support, any of a transparent support composed of a transparent material such as a plastic, and an opaque or reflective support composed of an opaque material such as a paper can be used.

As a material which can be used in the transparent support for recording media, materials which are transparent and have the nature of enduring the radiated heat upon use in OHP and back-lit display are preferred. Examples of the materials include polyesters such as polyethylene terephthalate (PET), polyethylene naphthalate (PEN), polysulfone, polyphenylene oxide, polyimide, polycarbonate, polyamide and the like. *Inter alia*, polyesters are preferable, and polyethylene terephthalate is particularly preferable. The thickness of the transparent support is not particularly limited, however 50 to 200 $\mu$m is preferable from the viewpoint of the handling property.

As an opaque support having high gloss, a support with the surface on which a colorant receiving layer is provided, having a gloss of 5 % or larger - preferably 15 % or larger - is preferable. The gloss is a value obtained according to the method of testing the specular surface gloss of the support at 75° (TAPPI T480).

Embodiments include paper supports having high gloss such as resin coated (RC) paper, baryta paper which are used in art paper, coated paper, cast coated paper, silver salt photographic supports and the like; films having high gloss by making opaque plastic films such as polyesters, such as polyethylene terephthalate (PET), cellulose esters such as nitrocellulose, cellulose acetate, cellulose acetate butyrate, polysulfone, polyphenylene oxide, polyimide, polycarbonate, polyamide and the like (which may have the surface subjected to calender treatment), by containing of a white pigment or the like; or supports in which a covering layer of polyolefin containing or not containing a white pigment is provided on the surface of the aforementioned various paper supports, the aforementioned transparent support or films containing a white pigment or the like.

Example of a suitable embodiment includes a white pigment-containing expanded polyester film (e.g. expanded PET which contains polyolefin fine particles and in which a void is formed by stretching). A thickness of the opaque support is not particularly limited, however 50 to 300 $\mu$m is preferable from the viewpoint of the handling property.

As already mentioned an important characteristic of a recording medium is the gloss. The gloss is preferably larger than 20 % at 20°, more preferably larger than 30 % as measured by a Dr. Lange Refo 3-D™ reflectometer. It has been found that the gloss of the medium can be improved by selecting the appropriate surface roughness of the used support. It was found, that providing a support having a surface roughness characterized by the value Ra being less than 1.0 $\mu$m, preferably below 0.8 $\mu$m a very glossy medium can be obtained. A low value of the Ra indicates a smooth surface. The Ra is measured according to DIN 4776; software package version 1.62 with the following settings: (1) Point density 500 P/mm (2) Area 5.6 $\times$ 4.0 $mm^2$ (3) Cutoff wavelength 0.80 mm (4) Speed 0.5 mm/s, using a UBM equipment.

In case paper is used as the support for the present invention the paper is selected from materials conventionally used in high quality printing paper. Generally it is based on natural wood pulp and if desired, a filler such as talc, calcium carbonate, $TiO_2$, $BaSO_4$, and the like can be added. Generally the paper also contains internal sizing agents, such as alkyl ketene dimer, higher fatty acids, paraffin wax, alkenylsuccinic acid, such as kymene, epichlorhydrin fatty acid amid and the like. Further the paper may contain wet an dry strength agents such as a polyamine, a poly-amide, polyacrylamide, poly-epichlorohydrin or starch and the like. Further additives in the paper can be fixing agents, such as aluminium sulphate, starch, cationic polymers and the like. The Ra value for a normal grade base paper is usually below 2.0 $\mu$m and may typically have values between 1.0 and 1.5 $\mu$m. The porous layer of the present invention or layers of which at least one comprises the microporous layer obtainable by this invention can be directly applied to this base paper.

In order to obtain a base paper with a Ra value below 1.0 $\mu$m such a normal grade base paper can be coated with a pigment. Any pigment can be used. Examples of pigments are calcium-carbonate, $TiO_2$, $BaSO_4$, clay, such as kaolin, styrene-acrylic copolymer, Mg-Al-silicate, and the like or combinations thereof. The amount being between 0.5 and 35.0 $g/m^2$ more preferably between 2.0 and 25.0 $g/m^2$. The paper can be coated on one side or on both sides. The amount mentioned before is the amount coated on one side. If both sides are coated the total amount preferably is between 4.0 and 50 $g/m^2$. This pigmented coating can be applied as a pigment slurry in water together with suitable binders like styrene-butadiene latex, styrene-acrylate latex, methyl methacrylate-butadiene latex, polyvinyl alcohol, modified starch, polyacrylate latex or combinations thereof, by any technique known in the art, like dip coating, roll coating, blade coating, bar coating, size press or film press. The pigment coated base paper may optionally be calendered. The surface roughness can be influenced by the kind of pigment used and by a combination of pigment and calendering. The base pigment coated paper substrate has preferably a surface roughness between 0.4 and 0.8 $\mu$m. If the surface roughness is further reduced by super calendering to values below 0.4 $\mu$m the thickness and stiffness values will in general become rather low.

The porous layer of the present invention or layers of which at least one comprises the microporous layer of this invention can be directly applied to the pigment coated base paper.

In another embodiment, the pigment coated base paper having a pigmented top side and a back-side is provided on both sides with a polymer resin through high temperature co-extrusion giving a laminated pigment coated base paper. Typically temperatures in this (co-)extrusion method are above 280 °C but below 350 °C. The preferred polymers used are polyolefins, particularly polyethylene. In a preferred embodiment the polymer resin of the top side comprises compounds such as an opacifying white pigment e.g. $TiO_2$ (anatase or rutile), ZnO or ZnS, dyes, colored pigments, including blueing agents, e.g. ultramarine or cobalt blue, adhesion promoters, optical brighteners, antioxidant and the like to improve the whiteness of the laminated pigment coated base paper. By using other than white pigments a variety of colors of the laminated pigment coated base paper can be obtained. The total weight of the laminated pigment coated base paper is preferably between 80 and 350 $g/m^2$. The laminated pigment coated base paper shows a very good smoothness, which after applying the porous layer or layers comprising the porous layer or layers of the present invention results in a recording medium with excellent gloss.

On the other hand, depending on the product one wants to make a polyethylene-coated paper can be used with a matte surface or silky surface such as well known in the art. Such a surface is obtained by conducting an embossing treatment upon extruding a polyethylene on a paper substrate.

As is evident from the description given above, the recording media comprising the microporous layer of this invention can be a single layer or a multi-layer applied onto a support. It can also comprise layers, which are non porous and are located below the microporous layer.

The membranes obtainable by following the invention can be produced in one single step or in successive steps as long as the preferred pore sizes, and porosity is obtained.

As a coating method, any methods can be used. For example, curtain coating, extrusion coating, air-knife coating, slide coating, roll coating method, reverse roll coating, dip coating, rod bar coating. This coating can be done simultaneously or consecutively, depending on the embodiments used.

Before applying the coating to the surface of the support material described above this support may be subjected to a corona discharge treatment, glow discharge treatment, flame treatment, ultraviolet light irradiation treatment and the like, for the purpose of improving the wettability and the adhesiveness.

If desired, e.g. for improving curling or blocking behavior or transportability properties in printing machines, one or more coating layers may be applied onto the backside of the support, i.e. the side opposite to the side to which the microporous membrane is adhered. These backside coating layers may contain polymeric binders and particles or beads and may be composed in such as way that a desired level of smoothness and gloss is obtained.

When used as recording media the membranes obtainable by the present invention can be used for a multitude of recording applications so it is within the scope of the present invention to provide recording media that are suitable for creating high quality images by using techniques as for example Giclée printing, color copying, screen printing, gravure, dye-sublimation, flexography, ink jet and the like.

Except for application in (inkjet) recording media, the microporous membranes find use in variety of other applications, such as in membranes for water treatment, for ultra filtration processes in the electrocoating of paint, in the food industry such as in the production process of cheese, clarification of fruit juice and in beer production, in the pharmaceutical industry where a high resistivity membrane for organic solvents is required, and in the biotechnology industry especially where flux reduction due to fouling by protein needs to be avoided. The hydrophilic character of the microporous membrane according to this invention may result in a significant reduction of the fouling rate of the membrane and makes it suitable for all kind of other application where conventional micro- and ultra filtration is applied.

The present invention will be illustrated in more detail by the following non-limiting examples. Unless stated otherwise, all ratios given are based on weight.

**Examples**

Preparation of coating compositions:

| A | 38 g epoxy diacrylate (CN132, supplied by Cray Valley) was dissolved in 14 g isopropanol and 50.5 g of water. |
|---|---|
| B | 38 g epoxy diacrylate (CN132, supplied by Cray Valley) and 0.6 g photo initiator (Irgacure™ 2959 supplied by CIBA Specialty Chemicals) were dissolved in 14 g isopropanol and 49.9 g of water. |
| C | 2 g of glycidyl methacrylate was added to 200 g of 10 % solution of alkali gelatine derived from bovine bone (MW 10 kiloDalton) at pH 9 and the mixture was stirred at 40 °C for 2 hours to introduce carbon-carbon double bonds. |
| D | 38 g epoxy diacrylate (CN132, supplied by Cray Valley) and 0.6 g photo initiator (Irgacure™ 2959 supplied by CIBA Specialty Chemicals) were dissolved in 14 g isopropanol and 32.4 g of water. To this composition was added 5 g of solution C and 10 g of a 3 % solution of a fluorosurfactant (Zonyl™ FSN 100 supplied by Dupont). |
| E | 22.5 g epoxy diacrylate (CN132, supplied by Cray Valley) and 15 g of an ethoxylated triacrylate (CN435, supplied by Cray Valley) and 0.6 g photo initiator (Irgacure™ 2959 supplied by CIBA Specialty Chemicals) were dissolved in 11.25 g isopropanol and 36.25 g of water. To this composition was added 5 g of solution C and 10 g of a 3 % solution of a fluorosurfactant (Zonyl™ FSN 100 supplied by Dupont). |
| F | 18 g epoxy diacrylate (CN132, supplied by Cray Valley) and 0.6 g photo initiator (Irgacure™ 2959 supplied by CIBA Specialty Chemicals) were dissolved in 17.8 g isopropanol and 63.6 g of water. |
| G | 81 g epoxy diacrylate (CN132, supplied by Cray Valley) and 0.6 g photo initiator (Irgacure™ 2959 supplied by CIBA Specialty Chemicals) were dissolved in 4 g isopropanol and 14.4 g of water. |
| H | 22.5 g ethoxylated (9) trimethylolpropane triacrylate (SR502, supplied by Sartomer, France) and 15 g of an ethoxylated triacrylate (CN435, supplied by Cray Valley) and 0.6 g photo initiator (Irgacure™ 2959 supplied by CIBA Specialty Chemicals) were dissolved in 17.5 g isopropanol and 44.5 g of water. |
| I | 22.5 g ethoxylated (10) bisphenol a diacrylate (SR602, supplied by Sartomer, France) and 15 g of an ethoxylated triacrylate (CN435, supplied by Cray Valley) and 0.6 g photo initiator (Irgacure™ 2959 supplied by CIBA Specialty Chemicals) were dissolved in 25.0 g isopropanol and 37.0 g of water. |
| J | 37.5 g pentaerythritol triacrylate (SR444, supplied by Sartomer, France) and 1.0 g photo initiator (Irgacure™ 2959 supplied by CIBA specialty Chemicals) were dissolved in 31.0 g isopropanol and 31.0 g of water. |
| K | 37.5 g tri(propyleneglycol) glycerolate diacrylate (supplied by Sigma Aldrich) and 1.0 g photo initiator (Irgacure™ 2959 supplied by CIBA Specialty Chemicals) were dissolved in 25.0 g isopropanol and 37.0 g of water. |
| L | 22.5 g tri(propyleneglycol) glycerolate diacrylate (supplied by Sigma Aldrich) and 15 g of an ethoxylated triacrylate (CN435, supplied by Cray Valley) and 0.6 g photo initiator (Irgacure™ 2959 supplied by CIBA Specialty Chemicals) were dissolved in 20.0 g isopropanol and 42.0 g of water. |
| M | 22.5 g tetra(ethyleneglycol) diacrylate (supplied by Sigma Aldrich) and 15 g of an ethoxylated triacrylate (CN435, supplied by Cray Valley) and 0.6 g photo initiator (Irgacure™ 2959 supplied by CIBA Specialty Chemicals) were dissolved in 20.0 g isopropanol and 42.0 g of water. |

**Preparation of recording media -**

The compositions A, B, D - M were coated on a polyethylene laminated base paper, that was subjected to a corona treatment prior to applying the coating layers simultaneously (where applicable) using a slide bead coater.

| R1 | Coating composition A was coated with 50 m$\ell$/m$^2$, Electron beam exposure in an inert gas (N$_2$), 180 keV, 90 kGy, with "P-200" supplied by ESI, Dried at 40 °C for 2 min. |
| R2 | Coating composition B was coated with 50 m$\ell$/m$^2$, UV light exposure, 0.18 J/cm$^2$, with "Light Hammer 6" supplied by Fusion UV Systems using an H-bulb, Dried at 40 °C for 2 min. |
| R3 | as R-2, Coating composition D was used instead of composition B. |
| R4 | as R-2, Coating composition E was used instead of composition B. |
| R5 | as R-2, Coating composition F was used instead of composition B. |
| R6 | as R-5, Coating composition G was used instead of composition E. |
| R7 | Coating composition B was coated with 25 m$\ell$/m$^2$, on top of which E was coated with 25 m$\ell$/m$^2$, by multilayer coating method, UV light exposure, 0.4 J/cm$^2$, with "Light Hammer 6" supplied by Fusion UV Systems, using an H-bulb Dry at 40 °C for 2 min. |
| R8 | as R-2, Coating composition H was used instead of composition B. |
| R9 | as R-2, Coating composition I was used instead of composition B. |
| R10 | as R-2, Coating composition J was used instead of composition B. |
| R11 | as R-2, Coating composition K was used instead of composition B. |
| R12 | as R-2, Coating composition L was used instead of composition B. |
| R13 | as R-2, Coating composition M was used instead of composition B. |

**Porosity**

The wet porosity is determined by the following formula:

$$\text{(Wet thickness / coated amount solids * 100 \%) - 100 \%}$$

The dry thickness is determined from SEM cross-section images; the wet thickness is determined by adding the swelling amount to the dry thickness. The swelling amount is determined by swelling the layer in water of 20 °C and recording the height increase using a needle. The wet thickness is taken as measure because this is the operational porosity.

**Drying speed**

For this test the EPSON PM-G820™ printer was used. A 4 cm x 4 cm square was printed black with the highest density. Just after the printing was finished, the 4 corners are wiped with a finger towards the white part of the medium and the results were judged according the following criteria.

Criteria: A: no smudge at all
B: very slight smudge, no practical problem
C: some smudge
D: severe smudge, not acceptable

**Gloss**

The gloss is measured at 20° using the REFO 3-D REFLEKTOMETER™ supplied by DR LANGE.

**Ozone fastness**

The ozone fastness is measured by exposing a test image having black, cyan, yellow and magenta patches of 1.0, 1.5 and 2 initial density to 0.5 ppm ozone for 48 h. The ozone fastness is judged visually using the following criteria:

A - very good almost no fading
B - good
C - acceptable
D - bad
0 - print is too bad to judge

| Examples | % water in solvent | Porosity (%) | Drying speed | gloss | Ozone fastness |
|---|---|---|---|---|---|
| R-1 | 78 | 86 | A | < 5 % | C |
| R-2 | 78 | 83 | A | < 5 % | C |
| R-3 | 77 | 62 | B | 33 % | B |
| R-4 | 82 | 69 | B | 42 % | B |
| R-5, comparative | 78 | < 2 | D | 55 % | 0 |
| R-6, comparative | 78 | < 2 | D | 60 % | 0 |
| R-7 | 78/82 | 83 | A | 40 % | B |
| R-8 | 72 | 74 | A | < 5 % | C |
| R-9 | 60 | 80 | A | < 5 % | C |
| R-10 | 50 | 71 | A | < 5 % | C |
| R-11 | 60 | 76 | A | < 5 % | C |
| R-12 | 68 | 85 | A | < 5 % | C |
| R-13 | 68 | 82 | A | < 5 % | C |
| Reference Fuji Premium Plus™ Photo Paper, 245 g/m$^2$ (swellable). | - | < 2 | C | 90 % | A |
| Reference Fuji Premium Plus™ Photo Paper, 235 g/m$^2$ (microporous). | - | 65* | A | 17 % | D |
| * determined by mercury porosimetry. | | | | | |

The examples R-1 and R-2 above show that both EB radiation and UV radiation are suitable to make a porous membrane according to the invention.

Examples R-3 and R-4 show the method to make a membrane having a high gloss. By adding low amounts of a surfactant and a methacrylate a glossy surface is obtained.

The optimum concentration lies between 20 and 80 weight percent, preferably between 30 and 60 weight percent as is exemplified by the examples R-5 and R-6 in which no porous layer is formed when the concentration of curable compounds is too low respectively too high.

Example R-7 combines the advantages of R-2 and R-6 in a two layer construct.

In the examples R-1 to R-7 as curable compound CN132 is used, in the examples R-8 to R-13 other monomers are applied that all give a good porosity. For each compound or combination of compounds the solvent mixture need to be optimized to find the most suitable ratio of water and isopropyl alcohol.

Examples R-3, R-4 and R-7 are most suitable as glossy inkjet recording medium. Examples R-1, R-2 and R-8 to R-13 are not glossy and can be used as matte inkjet recording media but also they are suitable for other applications in which drying speed (or solvent flux) is very important such as in many membrane applications.

These examples prove that it is possible to make membranes with a high porosity in a simple process with water as main solvent that allows high productions speeds and which process is environmental friendly and does not require expensive investments to guarantee a safe (explosion free) production.

**Claims**

1. A process for making a microporous membrane comprising the steps of:

- providing a mixture of at least one type of curable compound and a solvent, wherein the concentration of curable compounds is between 20 and 80 weight percent and wherein at least 30 weight percent of said solvent is water;
- applying said mixture to a support;
- curing said curable compound mixture by exposure to radiation, thereby causing phase separation between the crosslinked curable compound and the solvent;
- removing said solvent by drying and/or washing the resulting microporous membrane.

2. Process according to claim 1 wherein said microporous membrane is essentially free from organic and inorganic particles that are capable of absorbing solvent.

3. Process according to any of the previous claims wherein at least 50 weight percent of said solvent is water.

4. Process according to any of the previous claims wherein said membrane comprises pores with a mean diameter of between 0.001 and 2.0 micrometer.

5. Process according to any of the previous claims wherein said solvent comprises one or more volatile co-solvents having a boiling point lower than that of water.

6. Process according to any of the previous claims wherein said curable compound has a MW of less than 10 000 Dalton.

7. Process according to any of the previous claims wherein said curable compound is an ethylenically unsaturated compound, comprising one or more acrylate groups or methacrylate groups.

8. Process according to any of the previous claims wherein said microporous membrane comprises at least two layers having a chemically different composition.

9. Process according to any of the previous claims wherein said radiation is electromagnetic radiation generated by a source with main emissions between 200 and 450 nm.

10. Recording medium comprising a support and the microporous membrane produced according to any of the previous claims.

11. Medium according to claim 10 wherein said support is a transparent support suitable for back-lit applications and is selected from the group consisting of polyethylene terephthalate (PET), polyethylene naphthalate (PEN), polysulfone, polyphenylene oxide, polyimide, polycarbonate and polyamide.

12. Medium according to claim 10, wherein said support is a reflective support and is selected from the group consisting of a paper support, a plastic film and a support in which a covering layer of polyolefin optionally containing a white pigment is provided.

13. Use of a medium comprising a support and the microporous membrane produced according to any of claims 1-9 for printing images or letters thereon, using Giclée printing, color copying, screen printing, gravure, dye-sublimation, flexography, and/or ink jet printing.

**Patentansprüche**

1. Verfahren zum Herstellen einer mikroporösen Membran, umfassend die Schritte:

- Bereitstellen eines Gemisches aus wenigstens einer Art von härtbarer Verbindung und einem Lösungsmittel, wobei die Konzentration von härtbaren Verbindungen zwischen 20 und 80 Gew.-% liegt und wobei wenigstens 30 Gew.-% des Lösungsmittels Wasser ist;
- Aufbringen des Gemisches auf einen Träger;
- Härten des härtbaren Verbindungsgemisches durch Einwirkung von Strahlung, wodurch eine Phasentrennung zwischen der vernetzten härtbaren Verbindung und dem Lösungsmittel herbeigeführt wird;
- Entfernen des Lösungsmittels durch Trocknen und/oder Waschen der resultierenden mikroporösen Membran.

**2.** Verfahren nach Anspruch 1, wobei die mikroporöse Membran im Wesentlichen frei ist von organischen und anorganischen Teilchen, welche Lösungsmittel absorbieren können.

**3.** Verfahren nach einem der vorangehenden Ansprüche, wobei wenigstens 50 Gew.-% des Lösungsmittels Wasser ist.

**4.** Verfahren nach einem der vorangehenden Ansprüche, wobei die Membran Poren mit einem mittleren Durchmessen zwischen 0,001 und 2,0 Mikrometer umfasst.

**5.** Verfahren nach einem der vorangehenden Ansprüche, wobei das Lösungsmittel ein oder mehrere flüchtige Co-Solvenzien mit einem Siedepunkt, der niedriger als der von Wasser ist, umfasst.

**6.** Verfahren nach einem der vorangehenden Anspruche, wobei die härtbare Verbindung ein Molekulargewicht (MW) von weniger als 10000 Dalton aufweist.

**7.** Verfahren nach einem der vorangehenden Ansprüche, wobei die härtbare Verbindung eine ethylenisch ungesättigte Verbindung ist, die eine oder mehrere Acrylatgruppen oder Methacrylatgruppen umfasst.

**8.** Verfahren nach einem der vorangehenden Ansprüche, wobei die mikroporöse Membran wenigstens zwei Schichten mit einer chemisch unterschiedlichen Zusammensetzung umfasst.

**9.** Verfahren nach einem der vorangehenden Ansprüche, wobei die Strahlung elektromagnetische Strahlung ist, die durch eine Quelle mit Hauptemissionen zwischen 200 und 450 nm erzeugt wird.

**10.** Aufzeichnungsmedium, umfassend einen Träger und die mikroporöse Membran, die nach einem der vorangehenden Ansprüche hergestellt ist.

**11.** Medium nach Anspruch 10, wobei der Träger ein transparenter Träger ist, der sich für Anwendungen mit Hintergrundbeleuchtung eignet und ausgewählt ist aus der Gruppe bestehend aus Polyethylenterephthalat (PET), Polyethylennaphthalat (PEN), Polysulfon, Polyphenylenoxid, Polyimid, Polycarbonat und Polyamid.

**12.** Medium nach Anspruch 10, wobei der Träger ein reflektierender Träger ist und ausgewählt ist aus der Gruppe bestehend aus einem Papierträger, einer Kunststofffolie und einem Träger, in welchem eine Deckschicht aus Polyolefin, das gegebenenfalls ein Weißpigment enthält, bereitgestellt ist.

**13.** Verwendung eines Mediums, umfassend einen Träger und die mikroporöse Membran, die nach einem der Ansprüche 1-9 hergestellt ist, zum Drucken von Bildern oder Buchstaben darauf unter Verwendung von Giclée-Druck, Farbkopieren, Siebdruck, Tiefdruck, Farbstoffsublimation, Flexografie und/oder Tintenstrahldruck.

**Revendications**

**1.** Procédé pour fabriquer une membrane microporeuse comprenant les étapes consistant à :

   ■ fournir un mélange contenant au moins un type de composé durcissable et un solvant, dans lequel la concentration des composés durcissables est entre 20 et 80 pour cent en poids et dans lequel au moins 30 pour cent en poids dudit solvant sont de l'eau ;
   ■ appliquer ledit mélange à un support ;
   ■ durcir ledit mélange de composés durcissables par exposition à un rayonnement, pour ainsi provoquer une séparation de phases entre le composé durcissable réticulé et le solvant ;
   ■ enlever ledit solvant en séchant et/ou en lavant la membrane microporeuse résultante.

**2.** Procédé selon la revendication 1, dans lequel ladite membrane microporeuse est essentiellement exempte de particules organiques et inorganiques capables d'absorber un solvant.

**3.** Procédé selon l'une quelconque des revendications précédentes, dans lequel au moins 50 pour cent en poids dudit solvant est de l'eau.

**4.** Procédé selon l'une quelconque des revendications précédentes, dans lequel ladite membrane comprend des pores ayant un diamètre moyen situé entre 0,001 et 2,0 micromètres.

5. Procédé selon l'une quelconque des revendications précédentes, dans lequel ledit solvant comprend un ou plusieurs co-solvants volatils possédant un point d'ébullition inférieur à celui de l'eau.

6. Procédé selon l'une quelconque des revendications précédentes, dans lequel ledit composé durcissable possède un poids moléculaire MW inférieur à 10 000 Dalton.

7. Procédé selon l'une quelconque des revendications précédentes, dans lequel ledit composé durcissable est un composé éthyléniquement insaturé comprenant un ou plusieurs groupes acrylates ou groupes méthacrylates.

8. Procédé selon l'une quelconque des revendications précédentes, dans lequel ladite membrane microporeuse comprend au moins deux couches ayant des compositions chimiques différentes.

9. Procédé selon l'une quelconque des revendications précédentes, dans lequel ledit rayonnement est un rayonnement électromagnétique généré par une source dont les émissions principales sont situées entre 200 nm et 450 nm.

10. Milieu d'enregistrement comprenant un support et la membrane microporeuse produite selon l'une quelconque des revendications précédentes.

11. Milieu selon la revendication 10, dans lequel ledit support est un support transparent approprié pour des applications de rétroéclairage et est choisi dans le groupe constitué par un poly(téréphtalate d'éthylène) (PET), un poly-(naphtalate d'éthylène) (PEN), une polysulfone, un poly(oxyde de phénylène), un polyimide, un polycarbonate et un polyamide.

12. Milieu selon la revendication 10, dans lequel ledit support est un support réfléchissant et est choisi dans le groupe constitué par un support en papier, un film plastique et un support dans lequel une couche de recouvrement en polyoléfine contenant facultativement un pigment blanc est fournie.

13. Utilisation d'un milieu comprenant un support et la membrane microporeuse produite selon l'une quelconque des revendications 1 à 9, pour y imprimer des images ou des lettres par estampe numérique, photocopie couleur, sérigraphie, gravure, sublimation, flexographie et/ou impression par jet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1289767 A
- EP 1418058 A
- EP 1477318 A
- EP 0738608 A
- WO 9921723 A
- WO 0191999 A
- WO 0192023 A
- EP 0888903 A
- US 5079272 A
- EP 0803533 B
- US 4466931 A
- EP 0481517 B
- EP 0216622 A
- US 3823027 A
- US 4781985 A
- US 5084340 A

- EP 1437229 A
- WO 03054029 A
- WO 2005032837 A
- WO 2005032836 A
- DE 19721238 A
- EP 0576911 A
- US 3017280 A
- US 2983611 A
- US 3100704 A
- EP 1419984 A
- WO 2005032832 A
- WO 2005032834 A
- WO 2006011800 A
- JP 57173194 A
- JP 58024492 A

### Non-patent literature cited in the description

- **V.N. IZMAILOVA et al.** *Colloid Journal,* 2002, vol. 64 (5), 640-642

- **O. TOLEDANO et al.** *Journal of Colloid and Interface Science,* 1998, vol. 200, 235-240